# EUROPEAN PATENT APPLICATION

(11) **EP 0 633 453 A1**
(43) Date of publication of application: **11.01.1995**
(21) Application number: 94109821.2
(22) Date of filing: 24.06.1994
(51) Int. Cl.: G01C 22/00, B60K 37/06, G06M 1/28

(54) **Push button for the reset rod of a vehicle odometer**

(30) Priority: 09.07.1993 IT TO930165 U
(71) Applicant: MAGNETI MARELLI S.p.A., I-20145 Milano (IT)
(72) Inventor: Pulga, Giuseppe, I-20100 Milano (IT)
(74) Representative: Boggio, Luigi

(57) **Abstract**

An operating button (29) preferably fitted to the control rod (24) for resetting a vehicle trip odometer; the rod (24) being movable, against an elastic force, through an opening (33) in a display window (16); and the button (29) being accessible manually from outside the window (16), and presenting elastic tabs (34) which are inserted and snapped behind a shoulder (38) of the opening (33) in the window (16), and are guided in slackfree manner by a cylindrical surface (37) of the opening (33).

## Description

The present invention relates to an operating button for the control rod of a measuring instrument such as a vehicle trip odometer.

Various types of measuring instruments are known which require resetting between one measurement and the next. In the case of trip odometers with numbered drums, a rod is normally provided which is fitted through the transparent display window and operated manually for resetting the drums.

The usual operating button fitted to the control rod of known odometers presents several drawbacks, in that it must be preassembled to the rod to prevent it from being withdrawn; it must be centered in relation to the hole in the display window to prevent it from jamming when operated; and the connection is noisy, due to the clearance between the button and the display window.

Operating devices are known in which the reset device is particularly well made, e.g. provided with seals or latches, for eliminating some of the above drawbacks. Such reset devices, however, are invariably very expensive and fail to provide for eliminating all the drawbacks involved.

It is an object of the present invention to provide an extremely straightforward operating button for the control rod of a measuring instrument, designed to overcome the above drawbacks typically associated with known operating buttons.

According to the present invention, there is provided an operating button for the control rod of a measuring instrument, for example, a vehicle trip odometer, wherein said instrument comprises a display window; said rod is movable, against an elastic force, through an opening in said window; and said button is connected to said rod, and is manually accessible from outside said window; characterized by the fact that said button is hollow and connected frictionally to a portion of said rod; said button being guided by a substantially cylindrical surface of said opening.

Two preferred, non-limiting embodiments of the present invention will be described by way of example with reference to the accompanying drawings, in which:
Figure 1 shows a part view in perspective of a drum type odometer featuring the operating button according to the present invention;
Figure 2 shows a larger-scale axial section of a first embodiment of the operating button according to the present invention;
Figure 3 shows a larger-scale section along line II-II in Figure 2;
Figure 4 shows a larger-scale section along line IV-IV in Figure 2;
Figure 5 shows a larger-scale axial section of a further embodiment of the operating button according to the present invention;
Figure 6 shows a section along line VI-VI in Figure 5;
Figure 7 shows an external view of the Figure 6 button prior to assembly;
Figure 8 shows an external view of the button perpendicular to that of Figure 7.

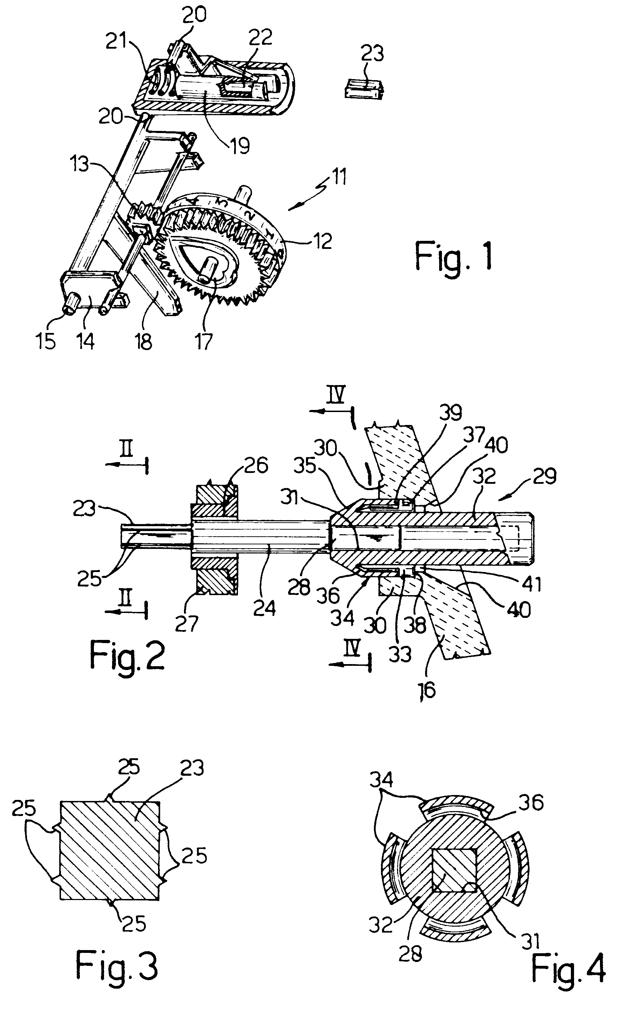

Number 11 in Figure 1 indicates a trip odometer comprising a series of numbered drums 12 (only one shown in the drawing) activated in known manner by a series of pinions 13 fitted to a movable frame 14 rotating about a shaft 15. Drums 12 are screened by a slotted wall (not shown) allowing the reading of one digit at a time through a transparent, external display window 16 (Figure 2).

Each drum 12 presents a reset cam 17 which is engaged by a reset member 18 fitted to frame 14; and frame 14 presents a pin 20 engaging an appendix of a slider 19 movable inside a guide against the action of a compression spring 21. When slider 19 is moved leftwards, frame 14 is rotated so as to release pinions 13 and reset drums 12 which, as is known, may be reset by repeatedly moving slider 19 manually in so-called "push-push" manner.

For this purpose, slider 19 presents a square-section cavity 22 in which is inserted a portion 23 of a control rod 24 (Figure 2). Portion 23 presents a number of axial ribs 25 (Figure 3) in various positions on four faces and which engage the inner surface of cavity 22 with a small amount of interference, for enabling correct positioning of rod 24 inside slider 19. Rod 24 fits through a hole 26 in an inner frame 27 of odometer 11, and terminates with a further prismatic, e.g. square-section, portion 28.

Portion 28 is fitted frictionally with an operating button indicated as a whole by 29 and having a cavity 31 with a complementary section to that of portion 28. More specifically, button 29 is molded from suitable plastic material, and presents a cylindrical body 32.

Button 29 fits through an opening 33 formed in display window 16, more specifically at a wedge-shaped projection 30 on the inside of window 16, and is operated, i.e. pressed, manually from outside window 16.

According to the present invention, button 29 presents four elastic tabs 34 (Figure 4), each projecting from and forming one piece with body 32 of button 29; button 29 presents a conical end portion 35 extending into a conical portion 36 of tabs 34; and tabs 34 extend axially towards window 16 from the connecting portion of body 32, and terminate in a free edge 39.

In actual use, tabs 34 are preloaded slightly so that they are coaxial with body 32 of button 29, and are guided with a small amount of friction on cylindrical surface 37 of opening 33 in window 16. Opening 33 also presents an annular shoulder 38 engaged by edge 39 of tabs 34, for preventing detachment of button 29 from rod 24; and a conical surface 40 terminating in a minimum-diameter portion 41 of opening 33, for assisting assembly of button 29.

Button 29 is inserted inside opening 33 from outside window 16, and engages conical surface 40 with portion 35 and portions 36 of tabs 34. Upon portions 36 reaching portion 41, tabs 34 flex inwards and snap behind shoulder 38 so that they are locked inside opening 33 in the cylindrical configuration shown in Figure 4.

When button 29 is pressed, tabs 34 slide along cylindrical surface 37 of opening 33, so that button 29 is perfectly centered inside opening 33, and tabs 34 are guided perfectly in slackfree manner by surface 37. Spring 21 (Figure 1) provides each time for moving rod 24 back to the right, and button 29 (Figure 2) is prevented from withdrawing by tabs 34 engaging shoulder 38 of opening 33.

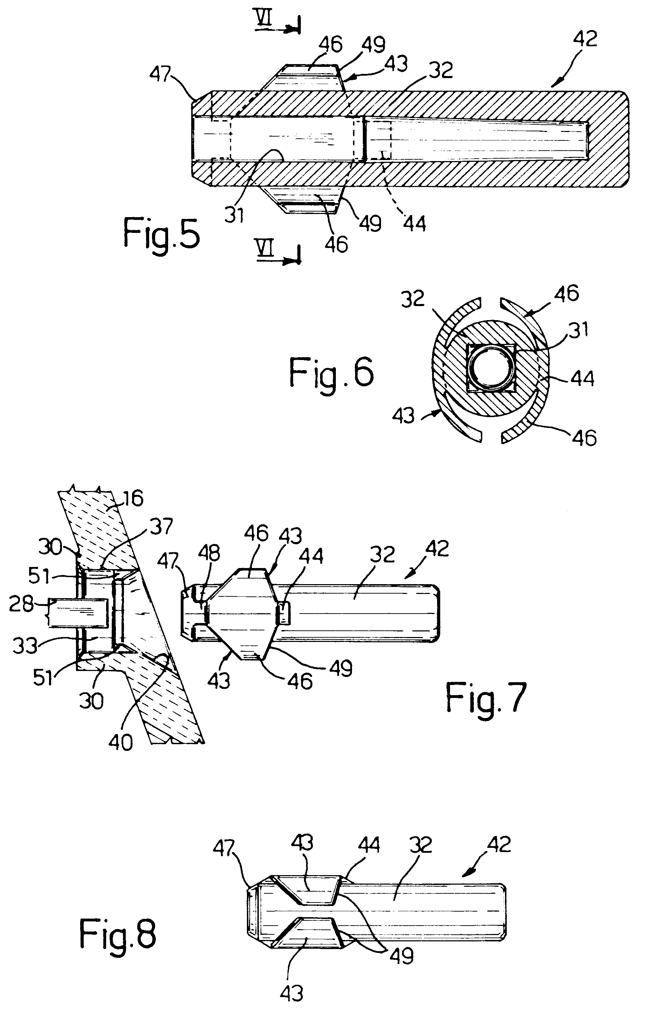

In the Figure 5-8 embodiment, button 42 presents two double tabs 43, each having an axial connecting portion 44 forming one piece with body 32 of button 42. Tabs 43 extend circumferentially in both directions from portion 44 so as to form two trapezoidal portions 46 (Figure 7) which, when idle, present a helical configuration as shown in Figure 6.

Button 42 presents a conical end 47 (Figures 5 and 7) with which blends an inclined surface 48 of axial portion 44 of tab 43; and each trapezoidal portion 46 presents an edge 49 for engaging a corresponding shoulder 51 of opening 33.

When inserting button 42 inside opening 33, end 47 of body 32 and inclined surfaces 48 engage conical surface 40 of opening 33; and the two trapezoidal portions 46 of each tab 43 are precompressed and snap behind shoulder 51 so as to lock button 42 on to window 16 as in the previous case.

The advantages of the operating button according to the present invention are as follows. Firstly, button 29, 42 is perfectly centered inside opening 33, so that tabs 34 are guided in slackfree manner by surface 37 of opening 33, thus eliminating any slack in relation to the guide and, hence, any vibration and/or noise. Secondly, button 29, 42 may be fitted to rod 24 from outside window 16, and remains firmly locked to rod 24 with no risk of accidental withdrawal. And lastly, it is both cheap and easy to produce by virtue of being formed in one piece with tabs 34, 43.

Clearly, changes may be made to the operating button as described and illustrated herein without, however, departing from the scope of the present invention. For example, body 32 of the button may present a knurled outer surface; changes may be made to the number and design of tabs 34, 43; and the button itself may be fitted to a different type of measuring instrument resettable by means of a rod fitted through an opening in display window 16.

## Claims

1. An operating button for the control rod of a measuring instrument, for example, a vehicle trip odometer, wherein said instrument comprises a display window (16); said rod (24) is movable, against an elastic force, through an opening (33) in said window (16); and said button (29, 42) is connected to said rod (24), and is manually accessible from outside said window (16); characterized by the fact that said button (29, 42) is hollow and connected frictionally to a portion (28) of said rod (24); said button (29, 42) being guided by a substantially cylindrical surface (37) of said opening (33).

2. A button as claimed in Claim 1, characterized by the fact that retaining means (38, 51) are provided for locking and preventing withdrawal of said button (29, 42) from said rod (24).

3. A button as claimed in Claim 1 or 2, characterized by the fact that it presents at least two elastic tabs (34, 43) by which it is guided by said surface (37).

4. A button as claimed in Claims 2 and 3, characterized by the fact that said retaining means comprise a shoulder (38, 51) on said surface (37) and which is engaged by said elastic tabs (34, 43).

5. A button as claimed in Claim 4, characterized by the fact that it is formed in one piece from plastic material; said button (29, 42) being fitted to said rod (24) from outside said window (16) by snapping said tabs (34, 43) behind said shoulder (38, 51).

6. A button as claimed in Claim 5, characterized by the fact that said tabs (34, 43) project from and are formed in one piece with the cylindrical body (32) of said button (29, 42), are substantially coaxial with said body (32), and present a free edge (39, 49) for engaging said shoulder (38, 51).

7. A button as claimed in Claim 6, characterized by the fact that said tabs (34) are connected to said body (32) at an annular connecting end, and extend axially towards said window (16) from said annular end; said shoulder (38) being annular.

8. A button as claimed in Claim 6, characterized by the fact that said tabs (43) are connected to said body (32) by an axial portion (44), and extend circumferentially in the form of two lateral portions (46) from said axial portion (44); said shoulder (51) being engaged by two adjacent edges (49) of said lateral portions (46).
